# EUROPÄISCHE PATENTSCHRIFT

(11) **EP 3 530 806 B1**
(45) Veröffentlichungstag und Bekanntmachung des Hinweises auf die Patenterteilung: **20.04.2022**
(21) Anmeldenummer: 19159363.1
(22) Anmeldetag: 26.02.2019
(51) Int. Cl.: E01C 7/18, E01C 23/06, C10C 3/00, C08L 95/00

(54) **VERFAHREN ZUR HERSTELLUNG VON REJUVENIERTEM ASPHALTGRANULAT, DAS MITTELS DES VERFAHRENS ERHÄLTLICHE ASPHALTGRANULAT UND DESSEN VERWENDUNG**
METHOD FOR THE PRODUCTION OF REJUVENATED ASPHALT GRANULATE, THE ASPHALT GRANULATE AVAILABLE BY THE PROCESS AND THE USE THEREOF
PROCÉDÉ DE PRODUCTION DE GRANULAT D'ASPHALTE RAJEUNI, GRANULAT D'ASPHALTE DISPONIBLE PAR LE PROCÉDÉ ET SON UTILISATION

(30) Priorität: 26.02.2018 EP 18158651
(43) Veröffentlichungstag der Anmeldung: 28.08.2019
(73) Patentinhaber: Basalt-Actien-Gesellschaft, 53545 Linz/Rhein (DE)
(72) Erfinder: STEPHAN Frank, 31241 Ilsede (DE)
(74) Vertreter: dompatent von Kreisler Selting Werner - Partnerschaft von Patent- und Rechtsanwälten mbB

(56) Entgegenhaltungen:
- EP-A1- 0 854 235
- WO-A1-2008/019648
- CA-A1- 2 743 280
- DE-A1- 3 446 174
- FR-A1- 2 639 375
- FR-A1- 2 689 051
- US-A- 5 544 971

## Beschreibung

Die vorliegende Erfindung betrifft ein Verfahren zur Herstellung von rejuveniertem Asphaltgranulat, das mittels des Verfahrens erhältliche Asphaltgranulat sowie dessen Verwendung.

Bei Asphalt handelt es sich um einen der Alterung unterworfenen Werkstoff. Durch die Alterung kommt es zu Eigenschaftsveränderungen, sodass der Asphalt zum Beispiel auf öffentlichen Straßen nach einer gewissen Zeit nicht mehr seinen Anforderungen gerecht wird und ersetzt werden muss.

Der beim Rückbau einer solchen Straße gewonnene Ausbauasphalt kann aufgrund der bereits vollzogenen Alterung nicht ohne weiteres wiederverwendet werden. Zwar ist die Verwendung von Ausbauasphalt bei der Herstellung neuen Asphaltmischguts seit vielen Jahren bekannt. Dennoch kann dies nach wie vor nur in begrenztem Maße praktiziert werden, da das im Ausbauasphalt vorhandene Bindemittel aufgrund der bereits durchlaufenen Alterung spröde geworden ist und somit dessen Wiederverwendung nur in Grenzen regelkonform ist.

Die Wiederverwendung von Ausbauasphalt ist auf der einen Seite zunächst eine wirksame Form des Umweltschutzes, da auf diese Weise natürliche Ressourcen in erheblichem Maße eingespart werden können. Auf der anderen Seite bedeutet diese Einsparung natürlicher Ressourcen ebenfalls eine Einsparung an wirtschaftlichen Ressourcen. Die Wiederverwendungsmenge von Ausbauasphalt liegt seit etwa 10 Jahren bei konstant etwa 20% bezogen auf die gesamte Asphaltmischgutproduktion.

Grundsätzlich ergeben sich fünf Faktoren über die die Wiederverwendungsquote gesteuert werden kann. Es handelt sich hierbei um
- Technik für die Asphaltmischgutherstellung (Paralleltrommel, Kaltzugabe, Mittenzugabe, etc.)
- Homogenität des aufbereiteten Asphaltgranulats
- Viskosität des im Asphaltgranulat enthaltenen Bindemittels
- Zusammensetzung des Asphaltgranulats
- Qualität der enthaltenen Gesteinskörnungen

Eine gezielte Beeinflussung ist derzeit nur für die beiden erstgenannten Faktoren möglich. Die Zusammensetzung des Asphaltgranulats, die Qualität der enthaltenen Gesteinskörnungen sowie die Viskosität des darin enthaltenen Bindemittels (Erweichungspunkt Ring und Kugel, EPRuK) sind hingegen einer gezielten Beeinflussung nicht zugänglich.

Grundsätzlich gilt für den EPRuK, dass mit dessen Zunahme der Anteil von wiederaufbereitetem Asphaltgranulat in frischem Asphaltmischgut sinken muss, um den an den Asphalt gestellten technischen und gesetzlichen Anforderungen zu entsprechen. Es müssen vergleichsweise hohe Mengen an frischem Bindemittel zugegegen werden, um ein gealtertes Bindemittel aus dem Ausbauasphalt in dem Maß zu verjüngen, dass dessen rheologische Eigenschaften jenen eines frischen Bindemittels entsprechen. Frisches Bindemittel kann aber nicht unbegrenzt zugesetzt werden.

Eine Alternative zu der Zugabe von frischem Bindemittel bieten Additive in Form von Rejuvenatoren (Verjüngungsmittel), durch die die Viskosität des gealterten Bitumens herabgesetzt wird, sodass die Alterung des Bindemittels kompensiert wird.

Bislang werden Rejuvenatoren kurz vor der Verwendung von Asphaltmischgut in den Herstellungsprozess eingebracht. Rejuvenatoren werden weder bei niedrigen Temperaturen unter 100 °C zugegeben noch wird rejuveniertes Asphaltgranulat dauerhaft gelagert.

In der WO 2008/019648 A1 wird ein Verfahren zur Wiederverwendung von Ausbauasphalt offenbart, wobei der durch Alterung erhöhte Härtegrad des Bitumens im Ausbauasphalt mit einem Weichmacher eingestellt wird und dazu die kombinierte Zugabe eines Härters erfolgt.

CA 2,743,280 beschreibt pflanzenbasierte Trockenprodukte zum Recycling und Regenieren von beschichteten Zuschlagsstoffen. Eine längere Lagerung ist dort nicht beschrieben.

In der EP 0 409 097 A2 wird ein Verfahren für das umweltfreundliche Recycling von Ausbauasphalt unter Verwendung einer Bitumenemulsion offenbart, wobei der Bitumenemulsion kationische Emulgatoren und Natur- oder Synthesekautschuk oder Kunstharzdispersion zugesetzt sind.

Es ist daher die Aufgabe der vorliegenden Erfindung, ein Verfahren zur Herstellung von rejuveniertem Asphaltgranulat bereitzustellen, welches zumindest einige der Nachteile der Verfahren des Standes der Technik überwindet.

Gelöst wird die Aufgabe durch das Verfahren der vorliegenden Erfindung. Das Verfahren der vorliegenden Erfindung ist ein Verfahren zur Herstellung von rejuveniertem Asphaltgranulat, umfassend die Schritte
- Fräsen oder Brechen von Asphalt, um Ausbauasphalt (Fräsasphalt oder Aufbruchasphalt) bereitzustellen
- Zerkleinern und/oder Sieben des Ausbauasphalts, um Asphaltgranulat zu erhalten
- Zugabe eines Rejuvenators
- Lagerung des Asphaltgranulats mit dem Rejuvenator bei weniger als 60 °C für einen Zeitraum von mindestens 24 h, um rejuveniertes Asphaltsgranulat zu erhalten;
wobei die Zugabe des Rejuvenators vor dem Zerkleinern, nach dem Zerkleinern oder während des Zerkleinerns des Ausbauasphalts oder vor dem Sieben, nach dem Sieben oder während des Siebens des Ausbauasphalts, oder vor dem Fräsen oder während des Fräsens erfolgt.

Bereitgestellt wird also ein Verfahren zur Herstellung von Asphaltgranulat aus Asphalt, sogenanntem rejuveniertem Asphaltgranulat. Dieses Verfahren umfasst die Schritte des Bereitstellens von Ausbauasphalt (Fräsasphalt oder Aufbruchasphalt) durch Fräsen oder Brechen von Asphalt. Der Ausbauasphalt wird zerkleinert und/oder gesiebt, um Asphaltgranulat zu erhalten. Rejuvenator wird zugegeben, um rejuveniertes Asphaltgranulat zu erhalten.

Das rejuvenierte Asphaltgranulat kann in einer Ausführungsform zu neuen Gesteinkörnungen und neuem Bitumen gegeben werden, um Asphaltmischgut zu erhalten. Es kann so die Menge des zu verwendenden neuen Materials reduziert werden. Bei der damit verbundenen Senkung des Zugabebindemittelgehaltes ist zusätzlich die Menge des eingesetzten Rejuvenators zu berücksichtigen, das heißt, es kann die Menge an neuem Bitumen durch Zugabe sowohl des Bitumens aus dem Asphaltgranulat selbst als auch des Rejuvenators reduziert werden. Das so erhaltene Asphaltmischgut kann dann mittels eines konventionellen Verfahrens im Straßenbau, beispielsweise zur Herstellung einer Asphalttragschicht, verwendet werden, wobei die Wiederverwendungsquote an Ausbauasphalt gegenüber einem konventionellen Verfahren unter Verwendung nicht rejuvenierten Ausbauasphalts erhöht werden kann.

Die Zugabe des Rejuvenators erfolgt vor dem Fräsen oder während des Fräsens von Asphalt, vor dem Zerkleinern, nach dem Zerkleinern oder während des Zerkleinerns des Ausbauasphalts oder vor dem Sieben, nach dem Sieben oder während des Siebens des Ausbauasphalts. Insbesondere kann die Zugabe des Rejuvenators auch zu bereits fertig hergestelltem Asphaltgranulat erfolgen.

Wie dem Fachmann bekannt ist, handelt es sich bei Asphalt um ein Gemisch aus Straßenbaubitumen oder bitumenhaltigen Bindemitteln und Gesteinskörnungen sowie gegebenenfalls weiteren Zuschlägen und/oder Zusätzen.

Ausbauasphalt im Sinne dieser Erfindung ist Fräsasphalt oder Aufbruchasphalt.

Im Sinne dieser Erfindung ist Fräsasphalt der durch Fräsen von Asphalt gewonnene Ausbauasphalt.

Aufbruchasphalt im Sinne dieser Erfindung ist der durch Aufbrechen/Aufnehmen eines Schichtenpaketes in Schollen gewonnene Ausbauasphalt.

Im Sinne dieser Erfindung umfasst Asphaltgranulat sowohl zerkleinerten Aufbruchasphalt als auch zerkleinerten Fräsasphalt sowie abgesiebten Fräsasphalt und zerkleinerten, abgesiebten Fräsasphalt.

Rejuveniertes Asphaltgranulat ist im Sinne dieser Erfindung demzufolge Asphaltgranulat, dem ein Rejuvenator zugegeben worden ist, und zusammen gelagert wurden.

In einer Ausführungsform der Erfindung erfolgt die Zugabe des Rejuvenators bei einer Temperatur von weniger als 100 °C. Die Zugabe kann auch bei einer Temperatur von weniger als 80°C oder weniger als 60 °C erfolgen. Sie erfolgt bevorzugt oberhalb von 0 °C, oberhalb von 10 °C oder oberhalb von 20 °C. Typischerweise erfolgt sie bei der Außentemperatur.

In einer weiteren Ausführungsform der Erfindung umfasst das Verfahren eine Lagerung des rejuvenierten Asphaltgranulats von mindestens 24 h. Die Lagerung kann auch mindestens 1 Woche, 2 Wochen oder 4 Wochen dauern. Aus wirtschaftlichen Gründen überschreitet die Lagerungezeit typischerweise nicht 1 Jahr. Sie liegt bevorzugt unterhalb von 6 Monaten oder unterhalb von 3 Monaten und unterhalb von einem Monat.

In einer weiteren Ausführungsform der Erfindung erfolgt die Lagerung bei weniger als 60 °C, bevorzugt bei weniger als 50 °C, besonders bevorzugt bei weniger als 40 °C. Sie erfolgt bevorzugt oberhalb von 0 °C, oberhalb von 10 °C oder oberhalb von 20 °C. Typischerweise erfolgt sie bei der Außentemperatur.

In einer bevorzugten Ausführungsform wird der Rejuvenator also nicht erst kurz vor der Herstellung von Asphaltmischgut zum Asphaltgranulat gegeben. Der Rejuvenator kann somit auf den gealterten Asphalt einwirken.

Insbesondere können auf diese Weise große Mengen Asphaltgranulat einheitlich behandelt werden. Das so behandelte rejuvenierte Asphaltgranulat kann dann gelagert werden und die Eigenschaften des so rejuvenierten Asphaltgranulates können nach Ablauf eines Lagerungszeitraums detailliert analysiert werden, um exakte Vorhersagen über die Eigenschaften des Produktes zu erzielen.

Es ist auch möglich, Asphaltgranulat aus mehreren Baustellen zu gewinnen und gemeinsam zu behandeln, um ein einheitliches Produkt mit einheitlicher Qualität zu erhalten.

In einer Ausführungsform der Erfindung erfolgt die Zugabe des Rejuvenators in fester oder flüssiger Form. Gegebenenfalls muss das Asphaltgranulat mit dem Rejuvenator noch vermischt werden, um eine innige Verbindung zu erzielen.

In einer weiteren Ausführungsform der Erfindung ist der Rejuvenator ausgewählt aus der Gruppe bestehend aus mineralölhaltigen Stoffen wie Storflux (erhältlich von der Firma Storimpex) oder Aviaticon Fluxöl (erhältlich von der Firma Finke), pflanzlichen Stoffen wie Silvaroad RP 1000 (erhältlich von der Firma Arizona Chemical), Storflux Nature (erhältlich von der Firma Storimpex) und Rheophalt HP-EM (erhältlich von der Firma Ventraco), Wachsen wie Exponat 3 / 8021 (erhältlich von der Firma Sasol Wax) und Mischungen daraus.

In einer weiteren Ausführungsform der Erfindung erfolgt die Zugabe des Rejuvenators durch Zugabe einer Rejuvenator enthaltenden Substanz ausgewählt aus der Gruppe bestehend aus Sand, gröberen Gesteinskörnern, Zeolithen, Faserstoffen, Füllern und Mischungen daraus.

In einer Ausführungsform der Erfindung erfolgt die Zugabe des Rejuvenators kontinuierlich. Im Sinne dieser Erfindung bedeutet kontinuierliche Zugabe die Zugabe des Rejuvenators während des kontinuierlichen Herstellungsprozesses. Ein Ziel der kontinuierlichen Zugabe ist es, gleichbleibende Eigenschaften des hergestellten, rejuvenierten Granulates oder Fräsasphaltes zu erhalten.

In einer weiteren Ausführungsform beträgt das Massenverhältnis von Rejuvenator zu Ausbauasphalt mindestens 1:100.000, bevorzugt mindestens 1:10.000, mehr bevorzugt mindestens 1:1.000, noch mehr bevorzugt mindestens 1:100, am meisten bevorzugt 1:10.000 bis 1:100.

In einer weiteren Ausführungsform der Erfindung erfolgt das Zerkleinern mittels Kreiselbrecher, Backenbrecher, Prallbrecher, Kegelbrecher, Walzenbrecher, Hammerbrecher oder Fräsbrecher.

In einer Ausführungsform der Erfindung weist das Asphaltgranulat im Fall von rejuveniertem Aufbruchasphalt eine Stückgröße von höchstens 63 mm, im Fall von rejuveniertem Fräsasphalt eine Stückgröße von höchstens 200 mm, bevorzugt höchstens 100 mm auf.

In einer bevorzugten Ausführungsform der Erfindung weisen mindestens 95% oder mindestens 99% des Granulats im Fall von rejuveniertem Aufbruchasphalt eine Stückgröße von höchstens 63 mm auf, im Fall von rejuveniertem Fräsasphalt weisen mindestens 95% oder mindestens 99% eine Stückgröße von höchstens 200 mm, bevorzugt höchstens 100 mm auf.

Im Sinne dieser Erfindung entspricht die Stückgröße des Asphaltgranulats der Nennweite der Prüfsieböffnung, durch die die größten Stücke gerade noch hindurchgehen.

Eine Ausführungsform der Erfindung ist weiterhin rejuveniertes Asphaltgranulat erhältlich nach dem erfindungsgemäßen Verfahren.

Eine weitere Ausführungsform der Erfindung ist die Verwendung des rejuvenierten Asphaltgranulats erhältlich nach dem erfindungsgemäßen Verfahren zur Herstellung von Asphaltmischgut.

Die Erfindung wird durch die folgenden Beispiele, die den Schutzbereich in keiner Weise einschränken, illustriert.

### Beispiel 1: Zugabe des Rejuvenators vor dem Fräsen

Es wurde ein wachsbasierter Rejuvenator auf 50-60 °C erwärmt, bevor er in einer Menge von 250 g/cm³ auf die auszubauende Asphaltfläche aufgesprüht wurde. Nach Erstarren des Rejuvenators auf der Asphaltoberfläche wurde der Asphalt in einer Dicke von 8 cm gefräst. Insgesamt wurden auf diese Weise 1000 t Ausbauasphalt (Fräsgut) gewonnen, der auf einem Förderband in Transportfahrzeuge überführt wurde. Hierdurch wurde der Rejuvenator gleichmäßig in dem Fräsgut verteilt (homogenisiert).

Im Asphaltmischwerk wurde das rejuvenierte Fräsgut zu Asphaltgranulat mit einer Stückgröße von 32 mm zerkleinert (mittels Brecher) und 2 Tage zwischengelagert.

Bei dem daraus chargenweise hergestellten Asphalttragschichtmischgut enthielten 1000 kg Mischgut 500 kg rejuveniertes Asphaltgranulat, 485 kg neue Gesteinkörnungen und 15 kg neues Straßenbaubitumen 50/70. Das Mischgut wurde auf 160 °C erhitzt. Von diesem so hergestellten Asphaltmischgut wurden insgesamt 2000 t hergestellt und in einer Dicke von 8 cm eingebaut, so dass damit eine Fläche von 10.000 m² hergestellt werden konnte.

Bei einem Bitumengehalt von 5 Gew.-% im Asphaltgranulat wurde mit dem so rejuvenierten Ausbauasphalt eine Reduzierung des EPRuK um 5 K erzielt. Die Zugabemenge an Asphaltgranulat konnte durch das erfindungsgemäße Verfahren bei der Asphalttragschicht (Zugabe Straßenbaubitumen 50/70, resultierendes Straßenbaubitumen 30/45) gegenüber dem konventionellen Verfahren auf das 1,15 bis 1,20-fache gesteigert werden. Erfindungsgemäß können hier 500 kg Ausbauasphalt je Herstellcharge verwendet werden, während ein konventionelles Verfahren nur den Einsatz von 420 kg Ausbauasphalt ermöglicht. Bei der damit verbundenen Senkung des Zugabebindemittelgehaltes ist zusätzlich die Menge des eingesetzten Rejuvenators zu berücksichtigen.

### Beispiel 2: Zugabe des Rejuvenators nach dem Sieben

Eine Asphaltschicht wurde gefräst und durch das Fräsen kleinstückiger Ausbauasphalt gewonnen. Um eine maximale Stückgröße von 45 mm zu erzielen, wurde der Ausbauasphalt gesiebt, wobei etwa 20% des eingesetzten Ausbauasphalts ausgesiebt wurde.

Nach dem Sieben wurde der Ausbauasphalt mittels eines Förderbandes aus der Siebanlage befördert, wobei 1,25 kg eines auf 50-60 °C erwärmten wachsbasierten Rejuvenators pro 1000 kg Ausbauasphalt mit einem Bitumengehalt von 5 Gew.-% mittels einer quer über dem Förderband angeordneten Eindüsvorrichtung auf den gesiebten Ausbauasphalt aufgebracht wurden. Bei einer Förderleistung des Bandes von 125 t/h wurden 2,6 kg/min Rejuvenator fein verteilt auf das Granulat aufgesprüht. Das so erhaltene rejuvenierte Asphaltgranulat wurde 7 Tage zwischengelagert.

Bei dem daraus chargenweise hergestellten Asphalttragschichtmischgut enthielten 1000 kg Mischgut 500 kg rejuveniertes Asphaltgranulat, 485 kg neue Gesteinkörnungen und 15 kg neues Straßenbaubitumen 50/70. Das Mischgut wurde auf 160 °C erhitzt. Von diesem so hergestellten Asphaltmischgut wurden insgesamt 1000 t hergestellt und in einer Dicke von 10 cm eingebaut, so dass damit eine Fläche von 4.000 m² hergestellt werden konnte.

Bei einem Bitumengehalt von 5 Gew.-% im Asphaltgranulat wurde mit dem so rejuvenierten Ausbauasphalt eine Reduzierung des EPRuK um 5 K erzielt. Die Zugabemenge an Asphaltgranulat konnte durch das erfindungsgemäße Verfahren bei der Asphalttragschicht (Zugabe Straßenbaubitumen 50/70, resultierendes Straßenbaubitumen 30/45) gegenüber dem konventionellen Verfahren auf das 1,15 bis 1,20-fache gesteigert werden. Erfindungsgemäß können hier 500 kg Ausbauasphalt je Herstellcharge verwendet werden, während ein konventionelles Verfahren nur den Einsatz von 420 kg Ausbauasphalt ermöglicht. Bei der damit verbundenen Senkung des Zugabebindemittelgehaltes ist zusätzlich die Menge des eingesetzten Rejuvenators zu berücksichtigen.

### Beispiel 3: Zugabe des Rejuvenators nach dem Brechen

Es wurden 1.000 t Ausbauasphalt gebrochen und dadurch die entsprechende Menge an Asphaltgranulat erhalten. Das Asphaltgranulat wurde mittels eines Förderbandes aus dem Brecher abtransportiert. Bei einer Förderleistung des Bandes von 125 t/h wurden durch eine über dem Förderband angeordnete Eindüsvorrichtung 2,6 kg/min eines auf 50-60 °C erwärmten wachsbasierten Rejuvenators fein verteilt auf das durch das Brechen erhaltene Granulat aufgesprüht. Das Produkt wurde für 2 h gelagert.

Bei dem daraus chargenweise hergestellten Asphalttragschichtmischgut enthielten 1000 kg Mischgut 500 kg rejuveniertes Asphaltgranulat, 485 kg neue Gesteinkörnungen und 15 kg neues Straßenbaubitumen 50/70. Das Mischgut wurde auf 160 °C erhitzt. Von diesem so hergestellten Asphaltmischgut wurden insgesamt 1000 t hergestellt und in einer Dicke von 10 cm eingebaut, so dass damit eine Fläche von 4.000 m² hergestellt werden konnte.

Bei einem Bitumengehalt von 5 Gew.-% im Asphaltgranulat wurde mit dem so rejuvenierten Ausbauasphalt eine Reduzierung des EPRuK um 5 K erzielt. Die Zugabemenge an Asphaltgranulat konnte durch das erfindungsgemäße Verfahren konnte bei der Asphalttragschicht (Zugabe Straßenbaubitumen 50/70, resultierendes Straßenbaubitumen 30/45) gegenüber dem konventionellen Verfahren auf das 1,15 bis 1,20-fache gesteigert werden. Erfindungsgemäß können hier 500 kg Ausbauasphalt je Herstellcharge verwendet werden, während ein konventionelles Verfahren nur den Einsatz von 420 kg Ausbauasphalt ermöglicht Bei der damit verbundenen Senkung des Zugabebindemittelgehaltes ist zusätzlich die Menge des eingesetzten Rejuvenators zu berücksichtigen.

Alle zitierten Dokumente sind im vollen Umfang mit in die Offenbarung einbezogen, soweit diese Offenbarung nicht im Widerspruch zu der Lehre der Erfindung steht.

### Beispiel 4: Auswirkung der Lagerung

### a) Vergleichsbeispiel

100 kg Asphaltgranulat mit einer Korngröße < 16 mm wurde auf 135 °C erwärmt, 3 g eines Rejuvenators (Sylvaroad RP 1000, erhältlich von der Firma Arizona Chemical) zugegeben und unmittelbar zu einem Asphaltprobekörper verdichtet.

### b) Erfindungsgemäßes Beispiel

Zu identischem Asphaltgranulat wie im Vergleichsbeispiel a) wurde die gleiche Menge des Rejuvenators bei Raumtemperatur zugegeben und das behandelte Asphaltgranulat bei Raumtemperatur 5 Tage gelagert. Anschließend wurde das rejuvenierte Asphaltgranulat auf 135 °C erhitzt, um analog zum Vergleichsbeispiel einen Asphaltprobekörper zu formen.

Bei beiden Asphaltprobekörpern wurden EPRuK und Marschallstabilität gemessen. Es ergaben sich folgende Werte:

| | EPRuK [°C] | Marschallstabilität [kN] / Fließwert [mm] | |
|---|---|---|---|
| Vergleichsbeispiel a) | 57,4 | I | 13,7 / - |
| | | II | 13,6 / 4,1 |
| Beispiel b) | 56,0 | I | 15,3 / 4,4 |
| | | II | 15,5 / 3,7 |

Es zeigt sich, dass die Marschallstabilität bei dem erfindungsgemäß behandelten Probenkörper ca. 12% höher ist als beim herkömmlichen Verfahren. Außerdem weist das erfindungsgemäße Produkt einen günstigeren Erweichungspunkt auf. Damit zeigt das erfindungsgemäße Verfahren eine bessere Wirkung als ein klassisches Verfahren, bei dem die Zugabe im Schritt der Heißverarbeitung erfolgt.

## Patentansprüche

1. Verfahren zur Herstellung von rejuveniertem Asphaltgranulat, umfassend die Schritte
- Fräsen oder Brechen von Asphalt, um Ausbauasphalt bereitzustellen
- Zerkleinern und/oder Sieben des Ausbauasphalts, um Asphaltgranulat zu erhalten
- Zugabe eines Rejuvenators
- Lagerung des Asphaltgranulats mit dem Rejuvenator bei weniger als 60 °C für einen Zeitraum von mindestens 24 h, um rejuveniertes Asphaltsgranulat zu erhalten;
wobei die Zugabe des Rejuvenators vor dem Zerkleinern, nach dem Zerkleinern oder während des Zerkleinerns des Ausbauasphalts oder vor dem Sieben, nach dem Sieben oder während des Siebens des Ausbauasphalts, oder vor dem Fräsen oder während des Fräsens erfolgt.

2. Verfahren gemäß Anspruch 1, wobei der Ausbauasphalt Fräsasphalt oder Aufbruchasphalt ist.

3. Verfahren gemäß einem der Ansprüche 1 oder 2, wobei die Zugabe des Rejuvenators bei einer Temperatur von weniger als 100 °C erfolgt.

4. Verfahren gemäß einem der Ansprüche 1 bis 3, weiterhin umfassend eine Lagerung des rejuvenierten Asphaltgranulats für mindestens 1 Woche.

5. Verfahren gemäß einem der Ansprüche 1 bis 4, wobei die Lagerung bei weniger als 40 °C erfolgt.

6. Verfahren gemäß einem der Ansprüche 1 bis 5, wobei die Zugabe des Rejuvenators in fester oder flüssiger Form erfolgt.

7. Verfahren gemäß einem der Ansprüche 1 bis 6, wobei der Rejuvenator ausgewählt ist aus der Gruppe bestehend aus mineralölhaltigen Stoffen, pflanzlichen Stoffen, Wachsen und Mischungen daraus.

8. Verfahren gemäß einem der Ansprüche 1 bis 7, wobei die Zugabe des Rejuvenators durch Zugabe einer Rejuvenator enthaltenden Substanz ausgewählt aus der Gruppe bestehend aus Sand, gröberen Gesteinskörnungen, Zeolithen, Faserstoffen, Füllern und Mischungen daraus erfolgt.

9. Verfahren gemäß einem der Ansprüche 1 bis 8, wobei die Zugabe des Rejuvenators kontinuierlich erfolgt.

10. Verfahren gemäß einem der Ansprüche 1 bis 9, wobei das Massenverhältnis von Rejuvenator zu Ausbauasphalt mindestens 1:100.000, bevorzugt mindestens 1:10.000, mehr bevorzugt mindestens 1:1.000, noch mehr bevorzugt mindestens 1:100, am meisten bevorzugt 1:10.000 bis 1:100 beträgt.

11. Verfahren gemäß einem der Ansprüche 1 bis 10, wobei das Zerkleinern mittels Kreiselbrecher, Backenbrecher, Prallbrecher, Kegelbrecher, Walzenbrecher, Hammerbrecher oder Fräsbrecher erfolgt.

12. Verfahren gemäß einem der Ansprüche 1 bis 11, wobei das rejuvenierte Asphaltgranulat im Fall von rejuveniertem Aufbruchasphalt eine Stückgröße von höchstens 63 mm, im Fall von rejuveniertem Fräsasphalt eine Stückgröße von höchstens 100 mm aufweist.

13. Rejuveniertes Asphaltgranulat, erhältlich nach dem Verfahren gemäß einem der Ansprüche 1 bis 12.

14. Verwendung des rejuvenierten Asphaltgranulats gemäß Anspruch 13 zur Herstellung von Asphaltmischgut.

## Claims

1. A process for producing rejuvenated asphalt granulate, comprising the steps of
- milling or crushing asphalt to provide reclaimed asphalt;
- comminuting and/or screening said reclaimed asphalt to obtain asphalt granulate;
- adding a rejuvenating agent;
- storing said asphalt granulate with said rejuvenating agent at less than 60°C for a period of at least 24 hours to obtain rejuvenated asphalt granulate;
wherein said adding of the rejuvenating agent is effected before said comminution, after said comminution, or during said comminution of the reclaimed asphalt, or before the screening, after the screening, or during the screening of the reclaimed asphalt, or before the milling, or during the milling.

2. The process according to claim 1, wherein said reclaimed asphalt is asphalt planings or crushed asphalt.

3. The process according to either of claims 1 or 2, wherein the addition of said rejuvenating agent is effected at a temperature of less than 100°C.

4. The process according to any of claims 1 to 3, further comprising the storage of the rejuvenated asphalt granulate for at least one week.

5. The process according to any of claims 1 to 4, wherein said storage takes place at less than 40°C.

6. The process according to any of claims 1 to 5, wherein said rejuvenating agent is added in a solid or liquid form.

7. The process according to any of claims 1 to 6, wherein said rejuvenating agent is selected from the group consisting of petroleum-based materials, plant-based materials, waxes, and mixtures thereof.

8. The process according to any of claims 1 to 7, wherein the addition of said rejuvenating agent is effected by adding a substance comprising a rejuvenating agent selected from the group consisting of sand, coarse aggregates, zeolites, fibrous materials, fillers, and mixtures thereof.

9. The process according to any of claims 1 to 8, wherein the addition of said rejuvenating agent is effected continuously.

10. The process according to any of claims 1 to 9, wherein the mass ratio of rejuvenating agent to reclaimed asphalt is at least 1:100,000, preferably at least 1:10,000, more preferably at least 1:1,000, even more preferably at least 1:100, most preferably 1:10,000 to 1:100.

11. The process according to any of claims 1 to 10, wherein said comminution is effected by using a gyratory crusher, jaw crusher, impact crusher, cone crusher, roller crusher, hammer crusher, or milling crusher.

12. The process according to any of claims 1 to 11, wherein said rejuvenated asphalt granulate has a unit size of at most 63 mm in the case of rejuvenated crushed asphalt, and a unit size of at most 100 mm in the case of rejuvenated asphalt planings.

13. Rejuvenated asphalt granulate obtainable by the process according to any of claims 1 to 12.

14. Use of the rejuvenated asphalt granulate according to claim 13 for producing mixed asphalt material.

## Revendications

1. Procédé de production de granulat d'asphalte régénéré, comprenant les étapes
- fraisage ou concassage d'asphalte pour préparer de l'asphalte recyclé
- broyage et/ou tamisage de l'asphalte recyclé, afin d'obtenir du granulat d'asphalte
- addition d'un régénérateur
- conservation du granulat d'asphalte avec le régénérateur en dessous de 60 °C pendant une durée d'au moins 24 h, afin d'obtenir du granulat d'asphalte régénéré ;
dans lequel l'addition du régénérateur est effectuée avant le broyage, après le broyage ou pendant le broyage de l'asphalte recyclé, ou avant le tamisage, après le tamisage ou pendant le tamisage de l'asphalte recyclé, ou avant le fraisage ou pendant le fraisage.

2. Procédé selon la revendication 1, dans lequel l'asphalte recyclé est de l'asphalte fraisé ou de l'asphalte concassé.

3. Procédé selon la revendication 1 ou 2, dans lequel l'addition du régénérateur est effectuée à une température inférieure à 100 °C.

4. Procédé selon l'une des revendications 1 à 3, comprenant en outre une conservation du granulat d'asphalte régénéré pendant au moins 1 semaine.

5. Procédé selon l'une des revendications 1 à 4, dans lequel la conservation est effectuée en dessous de 40 °C.

6. Procédé selon l'une des revendications 1 à 5, dans lequel l'addition du régénérateur est effectuée sous forme solide ou liquide.

7. Procédé selon l'une des revendications 1 à 6, dans lequel le régénérateur est sélectionné parmi le groupe constitué par les matières contenant de l'huile minérale, les matières végétales, les cires et les mélanges de celles-ci.

8. Procédé selon l'une des revendications 1 à 7, dans lequel l'addition du régénérateur est effectuée par addition d'une substance contenant du régénérateur, sélectionnée parmi le groupe constitué par le sable, les granulats grossiers, les zéolithes, les matières fibreuses, les mastics et les mélanges de ceux-ci.

9. Procédé selon l'une des revendications 1 à 8, dans lequel l'addition du régénérateur est effectuée de manière continue.

10. Procédé selon l'une des revendications 1 à 9, dans lequel la proportion massique du régénérateur par rapport à l'asphalte recyclé vaut au moins 1:100 000, préférablement au moins 1:10 000, plus préférablement au moins 1:1 000, encore plus préférablement au moins 1:100, le plus préférablement de 1:10 000 à 1:100.

11. Procédé selon l'une des revendications 1 à 10, dans lequel le broyage est effectué au moyen d'un concasseur giratoire, d'un concasseur à mâchoires, d'un concasseur à percussion, d'un concasseur à cônes, d'un concasseur à rouleaux, d'un concasseur à marteaux ou d'un concasseur à fraise.

12. Procédé selon l'une des revendications 1 à 11, dans lequel le granulat d'asphalte régénéré comporte une granulométrie de 63 mm au maximum dans le cas de l'asphalte concassé régénéré et de 100 mm au maximum dans le cas de l'asphalte fraisé régénéré.

13. Granulat d'asphalte régénéré, pouvant être obtenu d'après le procédé selon l'une des revendications 1 à 12.

14. Utilisation du granulat d'asphalte régénéré selon la revendication 13 pour la fabrication d'enrobé asphaltique.
